# EUROPEAN PATENT SPECIFICATION

(11) **EP 2 625 053 B1**
(45) Date of publication and mention of the grant of the patent: **05.04.2017**
(21) Application number: 10798645.7
(22) Date of filing: 06.10.2010
(51) Int. Cl.: B60K 15/03, B60K 15/073, F17C 1/00

(54) **PRESSURE TANK**
DRUCKTANK
RÉSERVOIR SOUS PRESSION

(43) Date of publication of application: 14.08.2013
(73) Proprietor: Elpigaz Sp. z o.o., 80-299 Gdansk (PL)
(72) Inventor: JARZYNSKI, Grzegorz, PL 87-220 Radzyn Chelminski (PL)
(74) Representative: Sielewiesiuk, Jakub
(86) International application number: PCT/PL2010/050051
(87) International publication number: WO 2012/047123

(56) References cited:
- WO-A1-98/46443
- WO-A1-2009/082250
- FR-A3- 2 754 493
- GB-A- 2 095 808

## Description

Subject of the invention is pressure tank, especially three-bottoms tank, especially for volatile gases, liquid pressure gases and liquids, air, used in cars, rail vehicles, machines, stationary or mobile devices, as integral element of the unit or the unit itself.

There is known, from international patent application PCT No WO9846443, the flat tank for liquid gas, where two shells, upper and lower, have centrally welded conical, upper and lower flanges, connected together by the tube, with the holes equally located on the circumference.

There is also known, from description of Polish application No P-354299, gas tank, especially for liquid propane-butane, consisting of together fixed, profiled shells, upper and lower, as well as profiled middle tube, whereas the central tube has two through holes and two additional closing shells, and one shell has a connector pipe. The tank is characterized in that in one of additional central shells there is a valve with the tube in vertical axis of the tank, having exactly defined height in relation to central shell.

There is known, from Polish patent description No 192015 toroidal tank for propane-butane, consisting of primary tank with connector for valve group on the outer shell, characterized in that it has two central shells, upper and lower, located in the center, free space of primary tank and has through holes in the inner shell of primary tank.

There is known, from description of Polish patent application No P-381926 toroidal tank for liquid pressure gas, equipped with the hole for multi-valve head, brackets for fixing the upper plate, located on upper part of the tank and the lower plate, which has a hole with tube segment, characterized in that the toroidal tank is coupled to the chassis of vehicle by at least one, beneficially centrally located, beneficially threaded on the one end, tube for ventilation and fixing. The tube is fixed on the upper end with the lower plate, whereas the lower end is coupled to vehicle chassis, beneficially with the nut and washer.

Generic WO 2009/082250 A1, which corresponds to Polish application No P-384134, describes a four-bottoms tank, creating beneficially toroidal tank, containing connected bottoms, equipped with connecting pipes, brackets for fastening the tank and cover, equipment cover, central joint wit holes and central tube, wherein it comprises tightly connected at least four bottoms, where the outer, upper bottom creates with the outer, lower bottom the outer shell of the tank, whereas the inner, upper bottom, connected with the inner, lower bottom by the central tube and beneficially inner shell with holes, create the central joint, comprising additional work space.

According to the invention, there is provided a pressure tank as defined in claim 1.

Pressure tank, especially three-bottoms tank, according to the invention, creating beneficially toroidal tank, comprising connected together bottoms, equipped with connecting pipes, brackets for fastening the tank and cover, type plate, equipment cover, inner bottom, inner shell, wherein the outer, upper bottom together with the outer, lower bottom create the outer tank shell, whereas inner bottom is connected with the inner shell, creating the central, inner part of the tank. The inner shell of the tank, in specific case may have the shape of the tube, with the weld seam or without, the tube produced by rolling the sheet or few sheets, or the cone or truncated cone with different angles of side walls to the cone base, cylinder with the bottom or without the bottom, which may be straight or bend. Inner bottom or bottom used for inner shell and/or divider may have the shape of a sphere with different radius or more than one radius and/or truncated cones with different diameters of the base and the top and different angle of side walls to the cone base, with top welded or stamped, or the top open, not closed by any plane and/or cylinders with bottoms welded or stamped this way, that they create cylinder with bottom, being the round or shaped plate. In the standard alternative of invention, as result of connection of outer upper and lower bottoms with inner bottom and/or inner shell, toroidal tank is produced. Equipment connector pipes and flow connector pipes have on their lengths two zones: the first zone A - with walls of increased thickness and the second zone B- with walls of reduced thickness, beneficially on the whole circumference of connector, at the same moment thickness in the second zone B equals 0,5 to 1,7 of the thickness of tank walls, where the connector is placed, in case of walls thick 0,01 up to 2,9 mm and 0,3-1,4 for thickness of walls above 2,9 mm.
In the second alternative of invention, the central tank part is welded between the outer upper and lower bottoms, containing the inner bottom and/or inner shell.
Beneficially, connector pipes are welded to elements of the tank wall this way, that the lower end of the first zone (A) has a distance X to the wall of inner shell at least 1/5 of outer diameter of connector D, and length of the weld seam connecting the thin wall of connector outside of the first zone (A), with the tank wall, equals at least ¼ of outer circumference of connector in the second zone (B).
Beneficially, in the central, inner part of tank, in the inner and/or outer bottom, upper divider and/or lower divider are welded.
Beneficially, flow connectors are welded in inner bottom and/or upper divider this way, that part of flow connector with walls having the thickness 0,3 up to 1,7 of element walls, where it is welded, has weld seam with tank elements, which is long at least ¼ of outer circumference of connector, there where his diameter is minimum.
Beneficially, equipment connector pipes are welded to inner shell and/or inner bottom of central part of the tank and/or in upper divider and lower divider and/or in outer shell and/or outer, upper bottom and lower bottom.
Beneficially, equipment connector pipes are located circumferentially in the inner shell and/or located in inner bottom and/or upper and lower divider and/or outer shell and/or outer upper and lower bottom.
Flow connector pipes are located in tank elements, which create walls between particular tank parts, are located circumferentially in inner shell and/or in inner bottom and/or in upper and lower divider.
Beneficially, there is a type plate, fixed to inner bottom and/or upper and lower divider, at the small distance to tank walls, beneficially fixed spot wise.
Beneficially, the type plate, has bends on the edges and/or brackets located under the plate.
Beneficially, to outer upper bottom and/or lower bottom, are welded circumferencially connector pipes for equipment, at the angle 0° up to 355° and placed at angle γ in the range 0° up to 90° to horizontal plane and angle β between the connector pipes is between 0° up to 355° , whereas the connector pipes may be equipped with separate gas-tight housings and/or integrated housing, created by connecting housing of particular connector pipes by tubes.
Beneficially, elements of central, inner part of the tank and of others constructions like internal part of the tank and parts being in contact with working medium have the thickness 3 mm or less.
Beneficially, inner bottom and/or upper and lower divider may have places for engraving, replacing this way type plate.
Brackets for fixing base of the cover and/or cover of gas-tight chamber, may be fixed to the surface of inner bottom and/or the inner shell and/or upper and lower divider and/or outer bottoms.
Beneficially, gas-tight cover is fixed by elastic elements made from coiled wire and/or elastic flat bar, fastened to inner bottom and/or inner shell and/or outer bottoms and/or divider, beneficially self pressuring base of cover and/or chamber cover with tank equipment and/or cover seal.

Pressure tank, according to the invention, thanks to introduction of central part as in description for the invention, allows for reduction of materials necessary for production of the tank and better tests and research parameters, when compared with the tanks available on the market, with similar size and purpose. Appropriate selection of thickness for particular tank elements and beneficial technology for preparation assures, when compared to known design of toroidal tanks comprising of two outer bottoms fixed together by one inner element - for example central tube, bigger volume increase reached by lower pressure. Design of three bottoms tank increases the safety thanks to bigger volume increase before blowout, that means relation of volume increase in percents before blow out to pressure of blowout is bigger and allows for reduction of material quantity for the tank with similar outer size, volume, work parameters and purpose.
Thanks to appropriate selection of size and wall thickness of particular tank elements, design of three bottoms tank, described here, allows for changes of relation of volume increase in percent before the blowout to pressure at blowout - that means volume increase reached at particular blowout pressures, changes of blowout pressures according to requirements for particular tank application and to required volume increase before blowout and/or tank content flowout.
The inner bottom and/or inner shell and/or divider of central part of the tank, are part of tight chamber housing with tank equipment. Tank equipment and pipes installed in inner bottom and/or inner shell and/or divider, may beneficially be within tank maximum outer dimensions that means defined by surfaces of outer, upper and lower bottoms and/or outer shell.

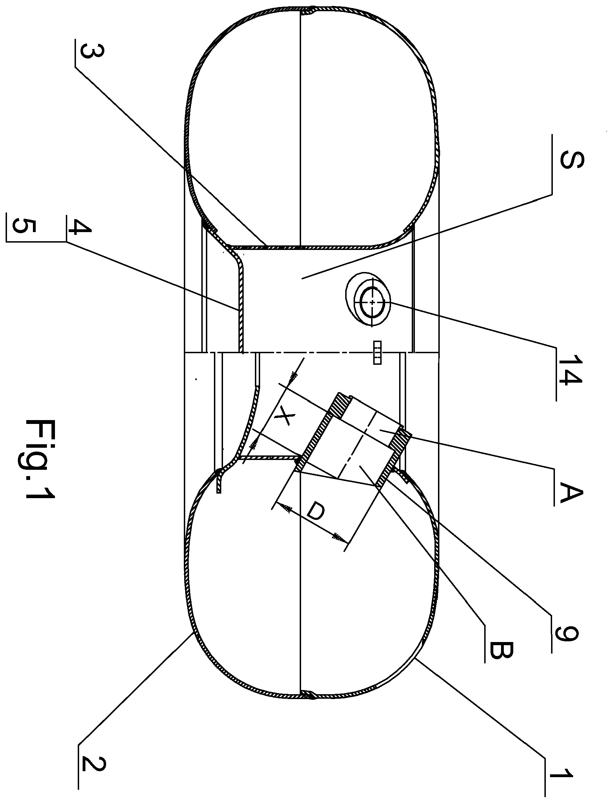

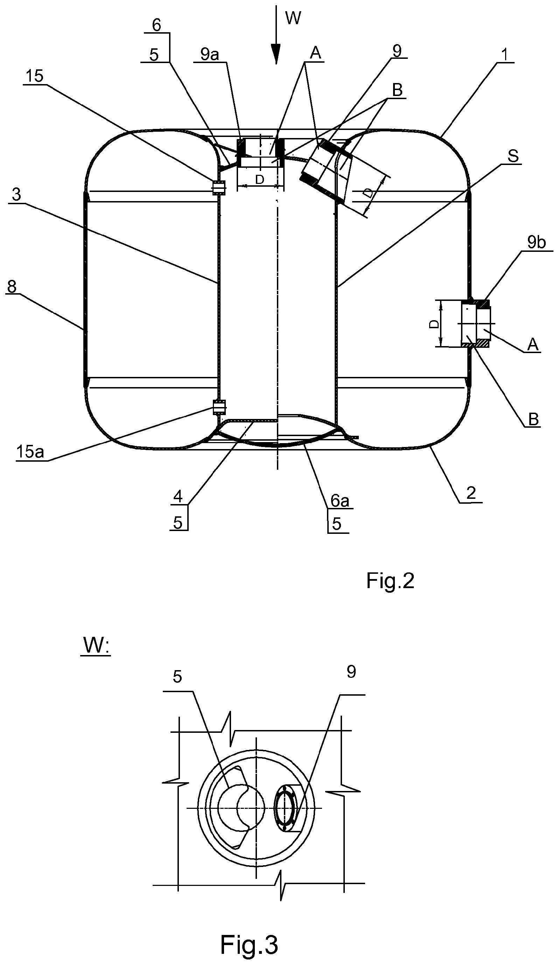

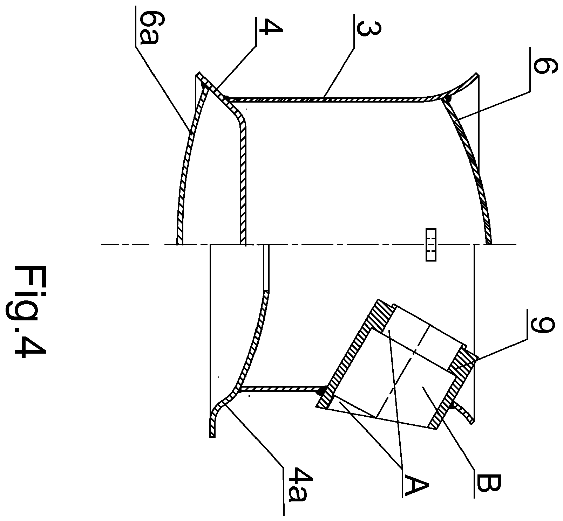

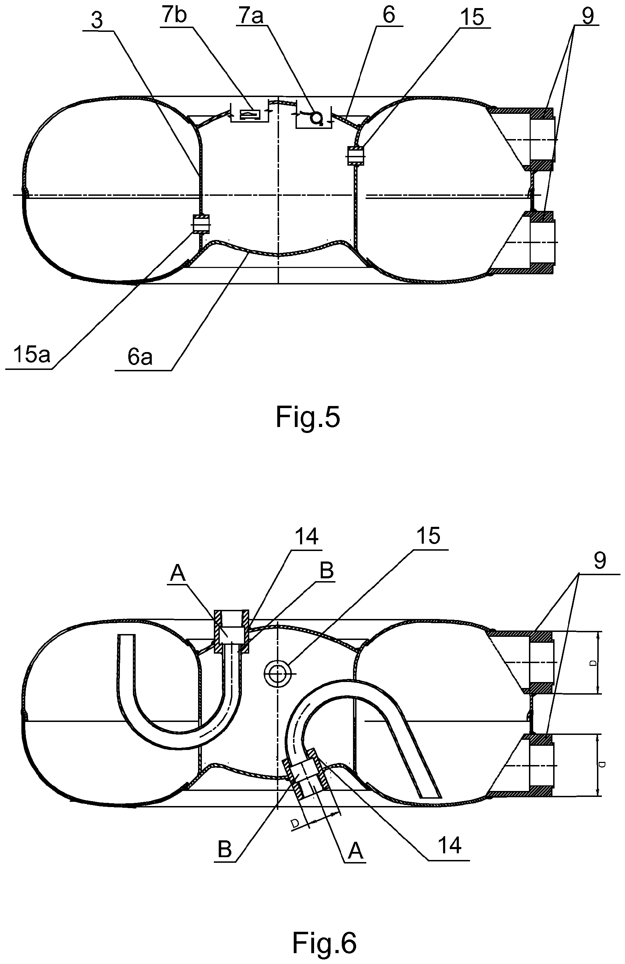

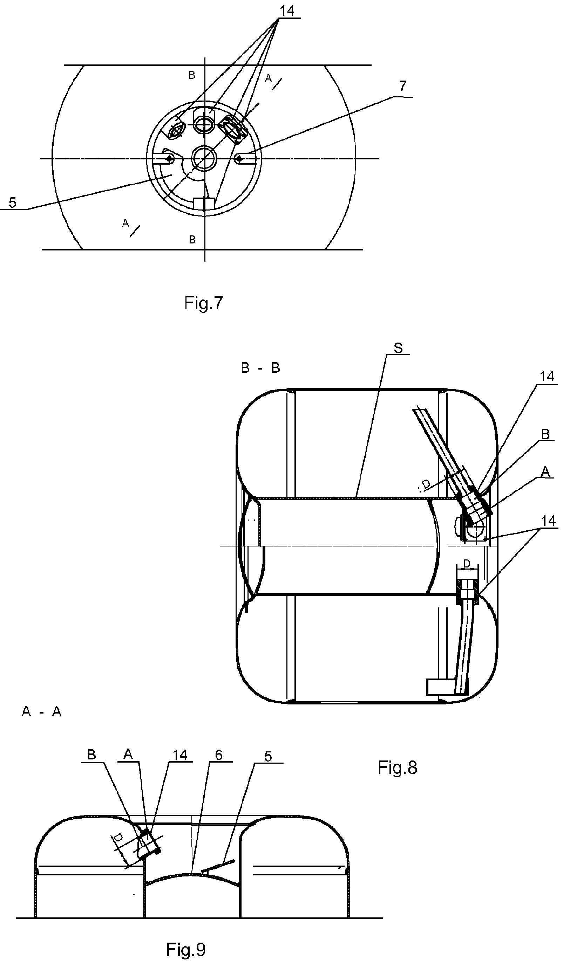

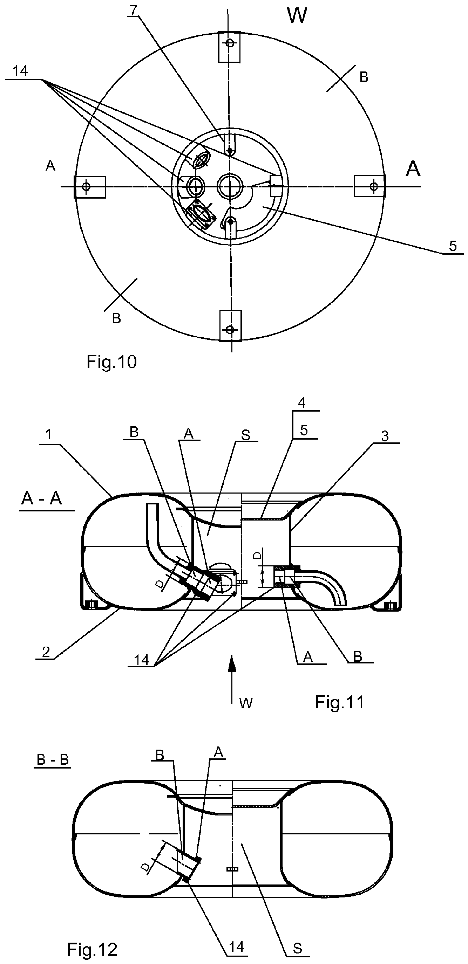

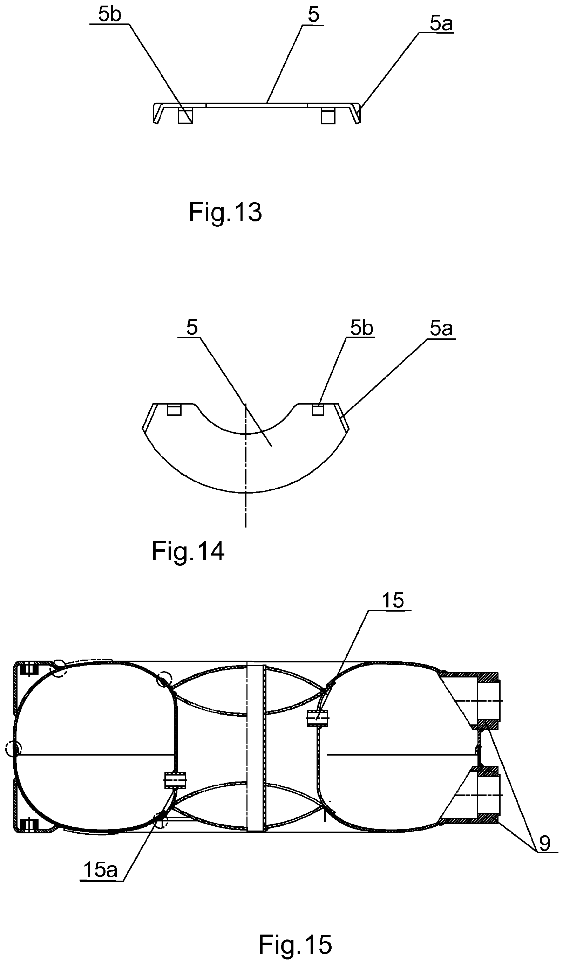

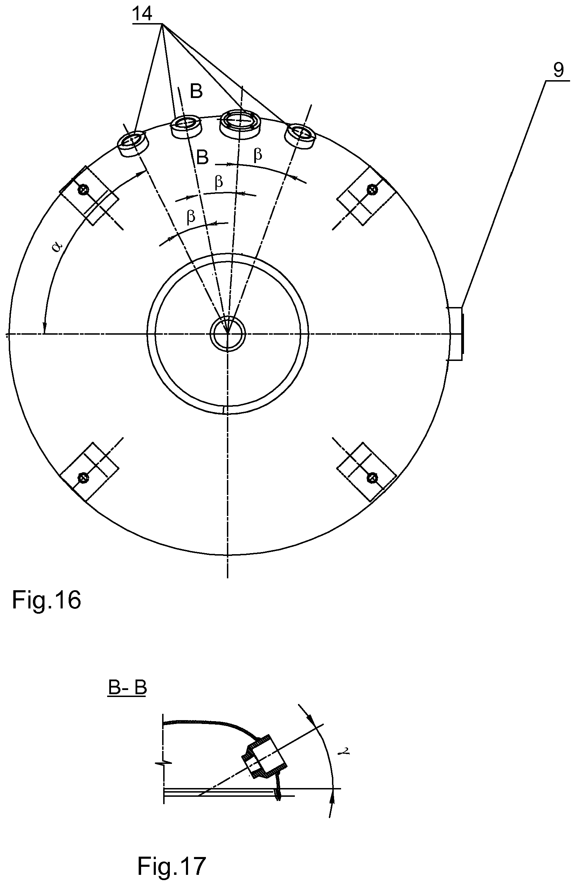

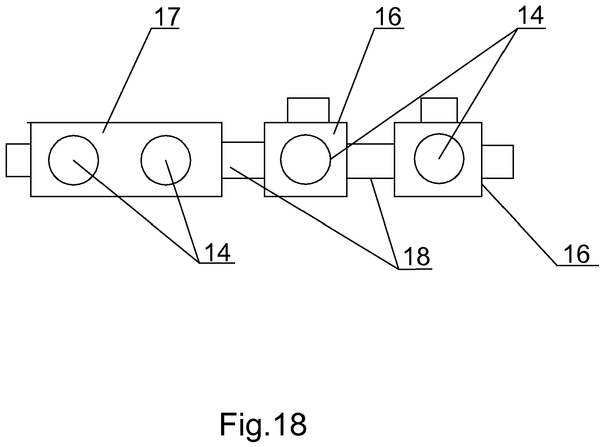

Pointwise fixing of type plate, with bended edges, instead of welding to the tank elements, makes it more easy and speeds up following operations in production process (welding, washing, painting) what brings measurable production savings.
The type plate may be the inner bottom and/or dividers, on surface of which data on product and/or producer are placed, according to the rules governing the particular usage of the tank
The tank according to the invention, may be installed with appropriate equipment in any plane, vertically or horizontally, according to the needs.
Subject o the invention is shown on the drawings, where fig. 1 presents cross section of toroidal tank, fig. 2 - cross section of the big volume tank with outer shell and connector pipe as alternative, fir. 3 - view W from fig. 2, fig. 4 - cross section of central part of the tank, fig. 5 - cross section of the tank with dividers as alternative, fig. 6 - cross section of the tank with dividers, connector pipes in dividers and/or inner bottom for tank equipment, fig. 7 - upper view of the tank with example of connector pipes for equipment, fig. 8 - section B-B from fig. 7, fig. 9 - cross section A-A of the tank from fig. 7, fig. 10 - view W of the tank rear, with connector pipes for equipment in lower position, fig. 11 - cross section A-A of toroidal tank in alternative from fig. 10, fig. 12 - section B-B of the tank in alternative form fig. 10, fig. 13 - front view of the type plate, fig. 14 - upper view of the type plate, fig. 15 - cross section of alternative with side connector pipes, fig. 16 - upper view of the tank with connector pipes on the circumference of the outer bottom, fig. 17 - section B-B from fig. 16, fig. 18 - layout of individual covers for particular connector pipes.
Outer, upper bottom 1 with outer, lower bottom 2 create outer shell of the tank, whereas outer bottom 4 is connected with the inner shell 3, creating central, inner part S of the tank, at the same moment connector pipes 9, 9a, 9b and 14 and flow pipes 15, 15a, have lengthwise two zones: the first zone A -walls with increased thickness and the second zone B - walls with reduced thickness, beneficially on the whole circumference of the connector pipe, and the wall thickness is between 0,5 up to 1,7 thickness of the tank shell, where the wall thickness is 0,01 up to 2,9 mm and 0,3 up to 1,4 for walls with thickness above 2,90 mm.
In the second example, there is central, inner part of the tank, comprising inner bottom 4 and/or inner shell 3, welded between outer bottoms: upper la and lower 2, connected by outer shell 8. Connector pipes 9, 9a, 9b and 14 are welded to elements of the tank shell this way, that the lower end of the first zone A of connector pipe 9, 9a, 9b and 14 is located at the distance X from the inner shell 3, not smaller than 1/5 of outer diameter of connector pipe D, and at the same moment the length of weld seam connecting thin wall of connector pipe, located behind the the first zone A with the tank shell, equals ¼ of the outer diameter of connector pipe in the second zone B.
In central part of the tank S, in inner shell 3 and/or inner bottom 4, are beneficially welded dividers, upper 6 and/or lower 6a.
Flow connectors pipes 15 and 15a are welded to inner bottom 4 and/or upper divider 6 this way, that the part of flow connector pipe 15 and 15a with walls thickness between 0,3 up to 1,7 of elements walls thickness, where it is welded to, is connected with the tank by weld seam not less long than ¼ of the circumference of the connector pipe, in the zone with minimum diameter.
Beneficially connector pipes 9, 9a, 9b for tank equipment are welded into outer shell 3 and/or inner bottom of central part S of the tank and/or in upper divider 6 and lower divider 6a and/or in outer shell 8 and/or outer, upper bottom 1 and lower 2.
Beneficially, connector pipes 14 for tank equipment are located circumferentially in inner shell 3 and/or upper divider 6 and lower 6a and/or in outer shell 8 and/or outer, upper bottom 1 and lower 2. Beneficially, flow connector pipes 15, 15 a are located in tank elements creating walls between particular tank parts, circumferentially placed in outer shell 3 and/or in inner shell 4 and/or upper divider 6 and lower 6a.
Type plate 5 is fixed to inner bottom 4 and/or outer shell 3 and/or upper divider 6 and lower 6a, not far away from tank walls, beneficially fixed point wise, whereas plate 5 may have bend edges 5a and/or located under the plate brackets 5b.
Beneficially, to outer upper bottom 1 and/or lower 2, connector pipes 14 and 9, 9a, 9b are circumferencially welded at the angle α, between 0° and 355° and located at the angle γ between 0° and 90° from the horizontal plane, and the angle β between connectors is between 0° and 355°, whereas connectors may be equipped with separate gas-tight housings 16 and/or integrated housing 17, created by connection through pipes 18 of individual housings of connectors.
Beneficially, elements of central, inner part S, having contact with working medium, are made of material having the thickness not bigger than 3 mm.
Inner bottom 4 and/or upper divider 6 and lower 6a may create type plate for the tank.
Beneficially, brackets 7, 7a, 7b of cover base and/or cover of gas-tight chamber are fixed to surface of inner bottom 4 and/or inner shell 3 and/or upper divider 6 and lower 6a and/or to outer bottoms 1 and 2.
Gas-tight cover is fastened by elastic elements having the form of coiled wire 7a and/or elastic flat bar 7b, fixed to inner bottom 4 and/or outer shell 3 and/or outer bottoms 1 and 2 and/or divider 6, beneficially automatically pressing the base of cover and/or chamber cover with tank equipment and/or sealing of the cover.

## Claims

1. Pressure tank, especially three-bottoms tank, creating beneficially toroidal tank, comprising connected bottoms, equipped with connector pipes, brackets for fastening the tank and cover, type plate, equipment cover, an inner bottom, and an inner shell, wherein an outer upper bottom (1) with an outer lower bottom (2) create an outer tank shell, whereas the inner bottom (4) is connected with the inner shell (3), creating a central inner part (S) of the tank, **characterised in that** connector pipes for equipment (9, 9a, 9b and 14) and flow connector pipes (15, 15a) have on their length two zones: a first zone (A) with walls of increased thickness and a second zone (B) with walls of reduced thickness, beneficially on the whole circumference of the connector pipe, and wall thickness in the second zone (B) is between 0,5 up to 1,7 of the thickness of the tank walls, where the pipe is placed, for walls thick 0,01 up to 2,9 mm, and 0,3 up to 1,4 for walls above 2,9 mm.

2. Pressure tank, according to claim 1, **characterized in that** there is a central tank part consisting of inner bottom (4) and/or inner shell (3), welded between upper (1) and lower (2) outer bottoms, which are connected by an outer shell (8).

3. Pressure tank, according to claims 1 or 2, **characterized in that** the connector pipes for equipment (9, 9a, 9b and 14) are welded into elements creating tank walls **in that** way, that the lower end of the first zone (A) of the connector pipe (9, 9a, 9b and 14) is at distance X to inner shell (3) not smaller than 1/5 of an outer diameter (D) of an outer connector pipe, and the length of a welding seam connecting a thin wall of the connector pipe outside of the first zone (A) with a tank wall is ¼ of an outer circumference of the connector pipe in the second zone (B), minimum.

4. Pressure tank, according to claims 1 or 2, **characterized in that** in the central part (S) of the tank, in inner shell (3) and/or in inner bottom (4), an upper divider (6) and/or lower divider (6a) are welded.

5. Pressure tank according to claim 1 or 2, **characterized in that** the flow connector pipes (15 and 15a) are welded into inner bottom (4) and/or upper divider (6) this way, that part of the flow connector pipe (15 and 15a) with walls in the range of 0,3 up to 1,7 of thickness of element walls, where it is welded, is connected with tank elements by a weld seam of a length not less than ¼ of the outer circumference of the connector pipe, where it has its smallest diameter.

6. Pressure tank, according to claims 1 or 2, **characterized in that** the connector pipes (9,9a, 9b) for tank equipment are welded into inner shell (3) and/or inner bottom (4) of the central part (S) of the tank and/or in upper divider (6) and lower divider (6a) and/or in outer shell (8) and/or outer upper bottom (1) and outer lower bottom (2).

7. Pressure tank, according to claim 1 or 2, **characterized in that** the connector pipes (14) for tank equipment are located circumferentially in inner shell (3) and/or in inner bottom (4) and/or upper divider (6) and lower divider (6a) and/or in outer shell (8) and/or outer upper bottom (1) and outer lower bottom (2).

8. Pressure tank, according to claim 1 or 2, **characterized in that** the flow connector pipes (15, 15a) are placed in tank elements creating walls between particular tank elements, are located circumferentially in inner shell (3) and/or in inner bottom (4) and/or upper divider (6) and lower divider (6a).

9. Pressure tank according to claim 1 or 2, **characterized in that** there is a type plate (5) fastened, beneficially point wise, to inner bottom (4) and/or inner shell (3) and/or upper divider (6) and lower divider (6a), at a small distance to the tank walls.

10. Pressure tank, according to claim 1 or 2, **characterized in that** there are connector pipes (9, 9a, 9b, 14) welded to outer upper bottom (1) and/or outer lower bottom (2) circumferentially at an angle (α) between 0° up to 355° and located at an angle (γ), between 0° up to 90° to a horizontal plane, and an angle (β) between the connector pipes is between 0° up to 355°, whereas the connector pipes are beneficially equipped with gas-tight housings (16) and/or integrated housing (17) created by connecting together individual connector pipes through pipes (18).

11. Pressure tank, according to claim 1 or 2, **characterized in that** the elements in the central inner part (S), which are having contact with a working medium, are made of a material not more than 3 mm thick.

12. Pressure tank according to claim 9, **characterized in that** the type plate (5) has located bended edges (5a) and/or brackets (5b) under the plate.

13. Pressure tank, according to claims 1 or 2, **characterized in that** the inner bottom (4) and/or upper divider (6) and lower divider (6a) create the type plate (5) of the tank.

14. Pressure tank according to claims 1 or 2, **characterized in that** the brackets (7, 7a, 7b) of cover base and/or cover of gas-tight chamber are fastened to the surface of inner bottom (4) and/or inner shell (3) and/or upper divider (6) and lower divider (6a) and/or outer upper and lower bottoms (1, 2).

15. Pressure tank, according to claim 14, **characterized in that** the cover of gas-tight chamber is fastened by elastic element from coiled wire (7a) or flat bar (7b), fixed to inner bottom (4) and/or inner shell (3) and/or outer upper and lower bottoms (1 and 2) and/or divider (6), beneficially automatically pressing the cover base and/or cover of chamber with tank equipment and/or cover sealing.

## Patentansprüche

1. Druckbehälter, insbesondere einer mit drei Böden, der vorzugsweise einen toroidalen Behälter bildet und die miteinander verbundenen Böden enthält, ausgerüstet mit Armatur-Anschlussstutzen, Befestigungshalterungen zur Behälters und der Abdeckung, einem Typenschild, einer Abdeckung der Armatur, einem Innenboden, einem Innenmantel, einer Trennwand, wobei der obere Außenboden (1) mit dem unteren Außenboden (2) die äußere Hülle des Behälters bilden, der Innenboden (4) ist dagegen mit dem Innenmantel (3) verbunden und sie bilden den mittleren Innenteil (S) des Behälters,
**dadurch gekennzeichnet, dass**
die Stutzen der Anschlussarmatur (9, 9a, 9b und 14) sowie die Durchflussstutzen (15, 15a) auf ihrer Länge zwei Zonen aufweisen: die erste Zone (A) - mit Wänden mit einer vergrößerten Dicke und die zweite Zone (B) - mit Wänden mit einer geringeren Dicke, vorzugsweise an dem gesamten Umfang des Stutzens, wobei sich die Wanddicke in der Zone (B) im Bereich von 0,5 bis 1,7 der Wanddicke der Elemente des Behälters bewegt, in denen der Stutzen für Wände mit einer Dicke von 0,01 bis 2,9 mm eingesetzt ist, und im Bereich von 0,3 bis 1,4 für Wände mit einer Dicke von über 2,9 mm.

2. Der Druckbehälter nach Anspruch 1, **dadurch gekennzeichnet, dass** zwischen dem oberen (1) und unteren (2) Außenboden, die durch den Außenmantel (8) verbunden sind, der mittlere Teil des Behälters eingeschweißt ist, der (der Teil) aus dem Innenboden (4) und/oder aus dem Innenmantel (3) besteht.

3. Der Druckbehälter nach Anspruch 1 oder 2, **dadurch gekennzeichnet, dass** die Stutzen der Anschlussarmatur (9, 9a, 9b und 14) in Elemente eingeschweißt sind, welche die Wände des Behälters so bilden, dass das untere Ende der Zone (A) des Stutzens (9, 9a ,9b und 14) von der Wand des Mantels (3) durch den Abstand X entfernt ist, der wiederum nicht geringer als 1/5 des Außendurchmessers des Stutzens (D) ist, wobei die Länge der Schweißnaht, welche die dünne Wand des Stutzens, die sich außerhalb der Zone (A) befindet, mit der Wand des Behälters verbindet, das Minimum von ¼ des Außenumfangs des Stutzens in der Zone (B) darstellt.

4. Der Druckbehälter nach Anspruch 1 oder 2, **dadurch gekennzeichnet, dass** im mittleren Teil des Behälters (S), im Innenmantel (3) und/oder im Innenboden (4), vorzugsweise die obere (6) und/oder die untere (6a) Trennwand eingeschweißt sind/ist.

5. Der Druckbehälter nach Anspruch 1 oder 2, **dadurch gekennzeichnet, dass** die Durchflussstutzen (15 und 15a) in den Innenboden (4) und/oder in die obere Trennwand (6) so eingeschweißt sind, dass der Teil des Durchflussstutzens (15 und 15a) mit den Wänden, die sich im Bereich von 0,3 bis 1,7 der Wanddicke des Elementes bewegen, in das er eingeschweißt ist, durch eine Schweißnaht, deren Länge nicht weniger als ¼ des Außenumfangs des Stutzens im Teil mit seinem geringsten Durchmesser ist, mit den Elementen des Behälters verbunden ist.

6. Der Druckbehälter nach Anspruch 1 oder 2, **dadurch gekennzeichnet, dass** die Anschlussstutzen (9, 9a, 9b) der Armatur des Behälters in den Innenmantel (3) und/oder in den Innenboden (4) des mittleren Teils des Behälters (S) und/oder in die obere (6) und untere (6a) Trennwand und/oder in den Außenmantel (8) und/oder in den oberen (1) und unteren (2) Außenboden eingeschweißt sind.

7. Der Druckbehälter nach Anspruch 1 oder 2, **dadurch gekennzeichnet, dass** die Anschlussstutzen (14) der Installationsarmatur des Behälters am Umfang des Innenmantels (3) und/oder im Innenboden (4) und/oder in der oberen (6) und unteren (6a) Trennwand und/oder im Außenmantel (8) und/oder im oberen (1) und unteren (2) Außenboden angebracht sind.

8. Der Druckbehälter nach Anspruch 1 oder 2, **dadurch gekennzeichnet, dass** die Durchflussstutzen (15 und 15a), die in den Elementen des Behälters eingesetzt sind, welche die Wände zwischen den einzelnen Teilen des Behälters bilden, am Umfang des Innenmantels (3) und/oder im Innenboden (4) und/oder in der oberen (6) und unteren (6a) Trennwand angebracht sind.

9. Der Druckbehälter nach Anspruch 1 oder 2, **dadurch gekennzeichnet, dass** an den Innenboden (4) und/oder an den Innenmantel (3) und/oder an die obere (6) und untere (6a) Trennwand das Typenschild (5) in geringem Abstand von den Wänden des Behälters befestigt wird, und zwar vorzugsweise nach Punkten.

10. Der Druckbehälter nach Anspruch 1 oder 2, **dadurch gekennzeichnet, dass** die Armaturenstutzen (14) sowie (9, 9a, 9b) in den oberen (1) und/oder unteren (2) Außenboden unter dem Winkel (α) zwischen 0° bis 355° am Umfang eingeschweißt sind und zwischen dem Winkel (γ) von 0° und 90° zur Horizontalen angeordnet sind, wobei sich der Winkel (β) zwischen den Stutzen in den Grenzen von 0° bis 355° bewegt, die Stutzen sind dagegen vorzugsweise mit getrennten gasdichten Gehäusen (16) und/oder dem Gehäusekomplex (17), gebildet durch die Verbindung mit Hilfe von Leitungen (18) der individuellen Gehäuse einzelner Stutzen, ausgerüstet.

11. Der Druckbehälter nach Anspruch 1 oder 2, **dadurch gekennzeichnet, dass** die Elemente, die zu den Bestandteilen des mittleren Innenteils (S) gehören und mit dem Arbeitsmedium in Berührung kommen, aus einem Material mit einer Dicke von gleich oder weniger als 3 mm gefertigt sind.

12. Der Druckbehälter nach Anspruch 9, **dadurch gekennzeichnet, dass** das Typenschild (5) an den Rändern Krümmungen (5a) und/oder unter dem Typenschild Distanzstützen (5b) aufweist.

13. Der Druckbehälter nach Anspruch 1 oder 2, **dadurch gekennzeichnet, dass** der Innenboden (4) und/oder die obere (6) und untere (6a) Trennwand das Typenschild (5) des Behälters darstellen.

14. Der Druckbehälter nach Anspruch 1 oder 2, **dadurch gekennzeichnet, dass** die Befestigungshalterungen (7, 7a, 7b) der Grundplatte der Abdeckung und/oder der Abdeckung der gasdichten Kammer an die Fläche des Innenbodens (4), und/oder an den Innenmantel (3) und/oder an die obere (6) und untere (6a) Trennwand und/oder an die Außenböden (1, 2) befestigt sind.

15. Der Druckbehälter nach Anspruch 14, **dadurch gekennzeichnet, dass** die Befestigung der gasdichten Abdeckung federnde Elemente in Form eines spiralförmigen Drahtes (7a) und/oder einer elastischen Flachstange (7b) sind, die an den Innenboden (4) und/oder an den Innenmantel (3) und/oder an die Außenböden (1 und 2) und/oder an die Trennwand (6) befestigt sind, die (die Elemente) vorzugsweise selbsttätig die Grundplatte der Abdeckung und/oder die Abdeckung der Kammer mit Armatur des Behälters und/oder die Dichtung der Abdeckung andrücken.

## Revendications

1. Le récipient sous pression, notamment à trois fonds, formant de préférence le récipient toroïdal contenant des fonds assemblés entre eux, équipé des tubulures de raccordement de la robinetterie, des poignées pour la fixation du récipient et du couvercle, de la plaque signalétique, du couvercle de la robinetterie, du fond interne, de l'enveloppe interne, de la cloison, où le fond externe supérieur (1) et le fond externe inférieur (2) forment une enveloppe externe du récipient, tandis que le fond interne (4) est relié avec l'enveloppe interne (3), en formant la partie centrale interne (S) du récipient,
**caractérisé en ce que**
les tubulures de la robinetterie de raccordement (9, 9a, 9b et 14) et les tubulures de débit (15, 15a) possèdent deux zones sur toute la longueur : la première zone (A) - avec les parois d'une épaisseur accrue et la deuxième zone (B) - avec les parois d'une épaisseur réduite, de préférence sur tout le périmètre de la tubulure, où l'épaisseur de la paroi dans la zone (B) se situe dans l'intervalle de 0,5 à 1,7 de l'épaisseur des parois du récipient sur lesquels la tubulure est montée, en cas de parois d'une épaisseur de 0,01 à 2,9 mm et dans l'intervalle de 0,3 à 1,4 en cas de parois d'une épaisseur supérieure à 2,9 mm.

2. Le récipient sous pression, selon la revendication 1, **caractérisé en ce qu'**entre le fond externe supérieur (1) et inférieur (2) qui sont reliés par l'enveloppe externe (8) la partie centrale du récipient est soudée, composée du fond interne (4) et/ou de l'enveloppe interne (3).

3. Le récipient sous pression, selon la revendication 1 ou 2, **caractérisé en ce que** les tubulures de la robinetterie de raccordement (9, 9a ,9b et 14) sont soudées dans les éléments formant les parois du récipient de telle sorte que l'extrémité inférieure de la zone (A) de la tubulure (9, 9a ,9b et 14) est éloignée de la paroi de l'enveloppe (3) à une distance X égale ou supérieure à 1/5 du diamètre externe de la tubulure (D), où la longueur de la soudure reliant la paroi fine de la tubulure qui se trouve en dehors de la zone (A) avec la zone du récipient constitue au moins ¼ du périmètre externe de la tubulure dans la zone B.

4. Le récipient sous pression, selon la revendication 1 ou 2, **caractérisé en ce que** dans la partie centrale du récipient (S), dans l'enveloppe interne (3) et/ou ou dans le fond interne (4) sont soudées de préférence des cloisons supérieure (6) et/ou inférieure (6a).

5. Le récipient sous pression, selon la revendication 1 ou 2, **caractérisé en ce que** les tubulures de débit (15 et 15a) sont soudées au fond interne (4) et/ou dans la cloison supérieure (6) de telle sorte qu'une partie de la tubulure de débit (15 et 15a) avec les parois dont l'épaisseur oscille de 0,3 à 1,7 de l'épaisseur des parois de l'élément auquel est soudé, est reliée avec les éléments du récipient par une soudure de la longueur égale ou supérieure à ¼ du périmètre externe de la tubulure dans la partie où son diamètre est le plus petit.

6. Le récipient sous pression, selon la revendication 1 ou 2, **caractérisé en ce que** les tubulures de raccordement (9, 9a, 9b) de la robinetterie du récipient sont soudées à l'enveloppe interne (3) et/ou au fond interne de la partie centrale du récipient (S) et/ou aux cloisons supérieure (6) et inférieure (6a) et/ou à l'enveloppe externe (8) et/ou au fond externe supérieur (1) et inférieur (2).

7. Le récipient sous pression, selon la revendication 1 ou 2, **caractérisé en ce que** les tubulures de raccordement (14) de la robinetterie d'installation du récipient sont disposées circonférentiellement dans l'enveloppe interne (3) et/ou sont placées dans le fond interne (4) et/ou dans les cloisons supérieure (6) ou inférieure (6a) et/ou dans l'enveloppe externe (8) et/ou dans le fond externe supérieur (1) et inférieur (2).

8. Le récipient sous pression, selon la revendication 1 ou 2, **caractérisé en ce que** les tubulures de débit (15, 15a) installées dans les éléments du récipient formant les parois entre les différentes parties du récipient sont disposées circonférentielleement dans l'enveloppe interne (3) et/ou sont placées dans le fond interne (4) et/ou dans les cloisons supérieure (6) et inférieure (6a).

9. Le récipient sous pression selon la revendication 1 ou 2, **caractérisé en ce qu'**au fond interne (4) et/ou à l'enveloppe interne (3) et/ou aux cloisons supérieure (6) et inférieure (6a) est fixée, à une courte distance des parois du récipient, la plaque signalétique (5) montée de préférence sur quelques points.

10. Le récipient sous pression selon la revendication 1 ou 2, **caractérisé en ce qu'**au fond externe supérieur (1) et/ou inférieur (2) sont soudées circonférentiellement sous l'angle (α) oscillant de 0° à 355° et placées sous l'angle (γ) oscillant de 0° à 90° par rapport au niveau des tubulures de robinetterie (14) et (9, 9a, 9b), en tenant compte que l'angle (β) entre les tubulures oscille de 0° à 355°, tandis que les tubulures sont équipées de préférence des logements séparés étanches aux gaz (16) et/ou du logement complexe (17) formé par le raccordement réciproque des logements individuelles des différentes tubulures à l'aide des tuyaux (18).

11. Le récipient sous pression, selon la revendication 1 ou 2, **caractérisé en ce que** les éléments faisant partie de la partie centrale interne (S) étant en contact avec un élément actif sont réalisés d'un matériau d'une épaisseur égale ou inférieure à 3 mm.

12. Le récipient sous pression selon la revendication 9, **caractérisé en ce que** la plaque signalétique (5) possède des courbures aux bords (5a) et/ou les supports d'écartement disposés au-dessous de la plaque signalétique (5b).

13. Le récipient sous pression selon la revendication 1 ou 2, **caractérisé en ce que** le fond interne (4) et/ou les cloisons supérieure (6) et inférieure (6a) constituent une plaque signalétique (5) du récipient.

14. Le récipient sous pression selon la revendication 1 et 2, **caractérisé en ce que** les poignées de fixation (7, 7a, 7b) de la base du couvercle et/ou du couvercle de la chambre étanche aux gaz sont fixées à la surface du fond interne (4), et/ou à l'enveloppe interne (3) et/ou aux cloisons supérieure (6) et inférieure (6a) et/ou aux fonds externes (1,2).

15. Le récipient sous pression selon la revendication 14, **caractérisé en ce que** la fixation du couvercle étanche aux gaz est constituée des éléments élastiques sous forme d'un fil enroulé (7a) et/ou du méplat élastique (7b) monté sur le fond interne (4) et/ou sur l'enveloppe interne (3) et/ou sur les fonds externes (1 et 2), et/ou sur la cloison (6), serrant de préférence eux-mêmes automatiquement la base du couvercle et/ou le couvercle de la chambre avec la robinetterie du récipient et/ou les joints d'étanchéité.
